# EUROPÄISCHE PATENTANMELDUNG

(11) **EP 1 942 451 A1**
(43) Veröffentlichungstag der Anmeldung: **09.07.2008**
(21) Anmeldenummer: 07123878.6
(22) Anmeldetag: 20.12.2007
(51) Int. Cl.: G06Q 10/00, G06K 19/077

(54) **Vorrichtung und Verfahren zum Beschriften eines Transportbehälters mit einer Zieladresse**

(30) Priorität: 22.12.2006 DE 102006061135
(71) Anmelder: SIEMENS AKTIENGESELLSCHAFT, 80333 München (DE)
(72) Erfinder: Schad, Jürgen, 78465, Konstanz (DE); Wilke, Wolf-Stephan, 78467, Konstanz (DE); Kast, Helmut, 78476, Allensbach (DE)

(57) **Zusammenfassung**

Die erfindungsgemäße Vorrichtung ist dazu ausgestaltet, eine vorgegebene Zieladresse (Add-1, Add-2) für einen Transportbehälter (B-1, B-2) abzuspeichern. Die Zieladresse (Add-1, Add-2) lässt sich in einem elektronischen Etikett (E-1, E-2) abspeichern. Der Transportbehälter (B-1, B-2), in dem der Gegenstand transportiert werden kann, weist eine Haltevorrichtung (HV-1, HV-2) auf. Das Etikett (E-1, E-2) lässt sich in diese Haltevorrichtung (HV-1, HV-2) einschieben. Die Haltevorrichtung (HV-1, HV-2) hält das Etikett (E-1, E-2), während der Transportbehälter (B-1, B-2) mit dem Gegenstand transportiert wird.

Das Etikett (E-1, E-2) lässt sich aus der Haltevorrichtung entnehmen. Erfindungsgemäß weist die Vorrichtung eine Aufnahmekomponente (oA-1, oA-2) zum Aufnehmen des Etiketts (E-1, E-2) auf. Diese Aufnahmekomponente (oA-1, oA-2) ist nicht am Transportbehälter (B-1, B-2) befestigt, sondern ist ortsfest. Die Vorrichtung umfasst weiterhin eine ortsfeste Übertragungseinrichtung (SG, Ant-1, Ant-2). Diese Übertragungseinrichtung (SG, Ant-1, Ant-2) ist dazu ausgestaltet, eine vorgegebene Zieladresse (Add-1, Add-2) an ein Etikett (E-1, E-2) zu übertragen, welches sich in der ortsfesten Aufnahmekomponente (oA-1, oA-2) befindet.

## Beschreibung

Die Erfindung betrifft eine Vorrichtung und ein Verfahren zum Anbringen einer vorgegebenen Zieladresse an einen Transportbehälter. Der Transportbehälter wird dazu verwendet, um einen Gegenstand im Transportbehälter an eine vorgegebene Zieladresse zu transportieren.

Bekannt ist es, einen Transportbehälter mit einem Etikett zu versehen, auf dem die Zieladresse aufgedruckt oder aufgeschrieben ist. Das Etikett ist beispielsweise ein Zettel oder ein Schild.

Beispielsweise Logistik-Dienstleister verwenden wiederverwendbare Transportbehälter, die nach einem Transport an eine Zieladresse an eine weitere Zieladresse transportiert werden. Die Verwendung der üblichen Etiketten hat den Nachteil, dass sie nach einem Transport an eine Zieladresse ersetzt oder wenigstens überschrieben werden müssen.

Daher wurden elektronische Etiketten entwickelt. Aus DE 102004037363 A1 sind eine Vorrichtung mit den Merkmalen des Oberbegriffs des Anspruchs 1 und ein Verfahren mit den Merkmalen des Oberbegriffs des Anspruchs 12 bekannt.

Ein Transportbehälter mit Postsendungen trägt ein elektronisches Etikett. Um das Etikett zu beschriften, wird der Behälter in eine bestimmte Position gebracht. Ein Erzeugungsmittel generiert Informationen für das Etikett, ein Übertragungsmittel überträgt diese Informationen auf das Etikett, wo sie abgespeichert werden. Das Übertragungsmittel ist z. B. in ein handgehaltenes Gerät eingebaut, welches ein Werker in die Nähe des Behälters führt und dort solange hält, bis die Informationen an das Etikett übertragen sind.

Das in DE 102004037363 A1 beschriebene Etikett vermag Informationen in einer Form darzustellen, die ein Mensch lesen kann. Um Informationen so an das Etikett zu übertragen, dass das Etikett sie in einer lesbaren Form darstellt, werden in manchen Situationen 20 bis 30 Sekunden benötigt.

Häufig überträgt die Übertragungseinrichtung die Informationen berührungslos und drahtlos an das Etikett. Eine zu hohe Sendeleistung kann einen Werker gesundheitlich beeinträchtigen. Die bekannte Anordnung hat den weiteren Nachteil, dass der Werker während des Übertragungsvorgangs keine weiteren Arbeiten am Behälter vornehmen kann, insbesondere ihn nicht beladen oder entladen kann. Dies ist bei einer Übertragungszeit von 20 bis 30 Sekunden von Belang.

Elektronische Etiketten sich auch aus DE 102004037364 A1 und DE 102004037365 A1 bekannt. Die zum Betrieb der Etiketten erforderliche Energie wird vorzugsweise über eine drahtlose Schnittstelle übertragen. Auch die anzuzeigenden Informationen werden berührungslos übertragen, z. B. von einem handgehaltenen Gerät oder von einem ortsfesten "gate", in dessen Nähe ein Behälter mit dem Etikett verbracht wird.

Aus DE 102005014363 A1 ist ein System zur Etikettierung von Ordnungsmitteln bekannt. Das Ordnungsmittel ist z. B. ein Aktenordner mit einem Ordnerrücken. Das Ordnungsmittel besitzt eine Halterungsvorrichtung zur Aufnahme eines Etiketts, wobei das Etikett eine Flüssigkristall-Anzeigefläche (LCD) aufweist. Das Etikett wird berührungslos von einem Rechner über eine Infrarot-Schnittstelle beschriftet. Das Etikett zeigt eine Information über das Ordnungsmittel in einer von einem Menschen lesbaren Form an, z. B. "Bauakte Cityhotel". Das Etikett wird beschriftet, während es sich in der Halterungsvorrichtung befindet. Ein Rechner übermittelt entsprechende Signale an ortsfeste Übertragungseinheiten, die sich z. B. ortsfest in einem Büroraum befinden und die Signale an einen Aktenordner mit dem Etikett weiterleiten.

In WO 2004/091813 A1 werden ein Verfahren und eine Vorrichtung beschrieben, um Beförderungsgüter, z. B. Pakete, zu vorgegebenen Zieladressen zu transportieren. Die Beförderungsgüter werden mit maschinenlesbaren Datenträgern versehen, in denen Informationen über das jeweilige Beförderungsgut abgespeichert sind. In einer Ausführungsform werden diese Informationen al Paketcode bezeichnet und enthalten die Abmessungen und das Gewicht des Beförderungsguts sowie die Geokoordinaten der Zieladresse. Diese abgespeicherten Informationen werden durch Lesegeräte ausgelesen und steuern das Zwischenlagern von Beförderungsgütern in einem Verteilzentrum sowie die Verteilung mit Fahrzeugen an die jeweilige Zieladresse.

Weiterhin wird in WO 2004/091813 A1 aus den Paketcodes mehrerer Beförderungsgüter zu einem Paket-Tourencode zusammengefasst. Gemeinsam transportierte Beförderungsgüter werden in eine Transportbox verbracht und in dieser transportiert. Möglich ist, in die Datenspeicher an den Paketen zusätzlich einen Tourencode abzuspeichern. Ein Paket-Tourencode wird an ein Verteilfahrzeug übermittelt, um die Fahrt dieses Fahrzeugs zu steuern und um die Zustellung der Pakete zu erleichtern.

Der Erfindung liegt die Aufgabe zugrunde, eine Vorrichtung mit den Merkmalen des Oberbegriffs des Anspruchs 1 und ein Verfahren mit den Merkmalen des Oberbegriffs des Anspruchs 12 bereitzustellen, die ein Beladen des Transportbehälters auch während des Übertragungsvorgangs ermöglicht.

Die Aufgabe wird durch eine Vorrichtung mit den Merkmalen des Anspruchs 1 und ein Verfahren mit den Merkmalen des Anspruchs 12 gelöst. Vorteilhafte Ausgestaltungen sind in den Unteransprüchen angegeben.

Die erfindungsgemäße Vorrichtung ist dazu ausgestaltet, eine vorgegebene Zieladresse für einen Transportbehälter abzuspeichern. Die Zieladresse lässt sich in einem elektronischen Etikett abspeichern. Der Transportbehälter, in dem der Gegenstand transportiert werden kann, weist eine Haltevorrichtung auf. Das Etikett lässt sich in diese Haltevorrichtung einschieben. Die Haltevorrichtung hält das Etikett, während der Transportbehälter mit dem Gegenstand transportiert wird.

Das Etikett läst sich aus der Haltevorrichtung entnehmen. Erfindungsgemäß weist die Vorrichtung eine Aufnahmekomponente zum Aufnehmen des Etiketts auf. Diese Aufnahmekomponente ist nicht am Transportbehälter befestigt, sondern ist ortsfest. Die Vorrichtung umfasst weiterhin eine ortsfeste Übertragungseinrichtung. Diese Übertragungseinrichtung ist dazu ausgestaltet, eine vorgegebene Zieladresse an ein Etikett zu übertragen, welches sich in der ortsfesten Aufnahmekomponente befindet.

Die Erfindung sieht vor, dass das Etikett vom Behälter getrennt wird, während die Übertragungseinrichtung die Zieladresse auf dem Etikett abspeichert. Während der Abspeicherung befindet sich das Etikett in der ortsfesten Aufnahmekomponente und nicht in der Haltevorrichtung. Diese Ausgestaltung ermöglicht es, die Zeit zum Abspeichern der Zieladresse zugleich dazu zu nutzen, den Behälter mit dem Gegenstand zu beladen. Dieses parallele Arbeiten spart Zeit gegenüber einem seriellen Arbeiten ein.

Häufig wird gewünscht, dass die Übertragungseinrichtung die Zieladresse berührungslos an das elektronische Etikett überträgt. Dies erspart auch im Falle einer ortsfesten Aufnahmekomponente die Notwendigkeit, das zu beschreibende Etikett exakt zu positionieren, was bei einer anderen Übertragungsart notwendig wäre.

Die Erfindung ermöglicht es, die Übertragungseinrichtung so weit entfernt von der Haltevorrichtung des Behälters anzubringen, dass die Strahlung der Übertragungseinrichtung die Gesundheit eines Werkers, der den Behälter belädt, nicht gefährdet.

Beim Beladen des Behälters braucht ein Werker nicht darauf zu achten, dass sich die Übertragungseinrichtung nahe der Haltevorrichtung befindet. Dies wäre nötig, wenn sich die Etikette beim Abspeichern der Zieladresse in der Haltevorrichtung befindet.

Vorzugsweise sind mehrere Aufnahmekomponenten vorgesehen. Die Übertragungseinrichtung vermag eine Zieladresse dann an ein Etikett zu übertragen, wenn das Etikett sich in einer der Aufnahmekomponenten befindet.

Vorzugsweise wird automatisch geprüft, ob der Transportbehälter tatsächlich mit einem elektronischen Etikett versehen wurde, nachdem ein Gegenstand in den Transportbehälter verbracht wurde. Hierzu sind ein Behälter-Sensor und ein Etikett-Sensor vorgesehen. Der Behälter-Sensor misst, ob sich ein Transportbehälter an einem vorgegebenen Ort zum Beladen befindet oder nicht. Der Behälter-Sensor erkennt nicht notwendigerweise einen bestimmten Transportbehälter, sondern nur, ob irgendein Transportbehälter sich an diesem Ort befindet oder nicht. Der Etikett-Sensor misst, ob sich in der Aufnahmekomponente ein Etikett befindet oder nicht. Auch der Etikett-Sensor erkennt nicht notwendigerweise ein bestimmtes Etikett, sondern nur, ob irgendein Etikett sich in der Aufnahmekomponente befindet.

Durch Auswerten der Messwerte von den beiden Sensoren wird automatisch erkannt, ob ein Transportbehälter von dem Beladeort entfernt wurde oder nicht. Ist dies der Fall, muss innerhalb einer vorgegebenen Zeitspanne auch ein Etikett aus der Aufnahmekomponente entnommen worden und in die Haltevorrichtung eingesteckt worden sein. Daher wird geprüft, ob nach dem Entfernen eines Behälters innerhalb dieser Zeitspanne ein Etikett aus der Aufnahmekomponente entnommen wurde. Ist dies nicht der Fall, so wird eine Fehlermeldung ausgegeben.

Umgekehrt wird automatisch erkannt, ob ein Etikett aus der Aufnahmekomponente entnommen wurde oder nicht. Ist dies der Fall, muss innerhalb einer vorgegebenen Zeitspanne auch ein Behälter von dem Ort entfernt worden sein. Daher wird geprüft, ob nach dem Entnehmen eines Etiketts ein Behälter vom Ort entfernt wurde. Ist dies nicht der Fall, so wird eine Fehlermeldung ausgegeben.

Im Folgenden wird die Erfindung anhand eines Ausführungsbeispiels beschrieben. Dabei zeigen
- Figur 1: den Anfangszustand vor dem Beladen der Transportbehälter und dem Beschreiben der Etiketten;
- Figur 2: den Zustand, nachdem die Etiketten in die ortsfesten Aufnahmekomponenten eingebracht sind und bevor die Transportbehälter beladen sind;
- Figur 3: den Zustand, nachdem beide Etiketten beschrieben sind und ein Transportbehälter beladen ist;
- Figur 4: den Zustand, nachdem in die Haltevorrichtung des beladenen Behälters das falsche Etikett gesteckt wurde;
- Figur 5: den Zustand, nachdem der Transportbehälter mit dem falschen Etikett von der Stellfläche genommen wurde.

Im Ausführungsbeispiel wird die Erfindung angewendet, um einen Stapel Postsendungen aus einer Sortieranlage zu entnehmen. Der Stapel fungiert als ein Gegenstand, der in einem Transportbehälter zu einer Zieladresse transportiert werden soll. Die Postsendungen sollen im Transportbehälter von einem Logistik-Dienstleister transportiert werden.

Die Sortieranlage arbeitet in einem Verteilzentrum und weist mehrere Ausgabefächer auf, in denen die Sortieranlage Postsendungen ausgibt. In jedem Postfach werden jeweils Sendungen für ein bestimmtes Zustellgebiet ausgegeben. Die Sortieranlage weist jedem Ausgabefach jeweils eine Zieladresse zu. Diese Zuordnung kann eine dauerhafte (statische) oder eine zeitweise (dynamische) sein.

Jedem Ausgabefach ist eine Stellfläche für einen Behälter zugeordnet. Möglich ist, dass dieselbe Stellfläche unterschiedlichen Ausgabefächern zugeordnet ist, die nacheinander entleert werden. Um Sendungen für das Zustellgebiet des Ausgabefachs aufzunehmen, stellt ein Werker einen Behälter auf diese Stellfläche und füllt die Sendungen des Ausgabefachs in diesen Behälter. Möglich ist auch, dass die Sortieranlage die Sendungen für das Zustellgebiet direkt in einen Behälter ausgibt, der auf der Stellfläche des Ausgabefachs steht.

Alle Sendungen, die die Sortieranlage in ein bestimmtes Ausgabefach ausgibt, sind für ein bestimmtes Zustellgebiet bestimmt. Für den weiteren Transport des Behälters, in dem sich Sendungen aus diesem Ausgabefach befinden, wird daher eine Spezifikation für dieses Zustellgebiet benötigt. Dieses Zustellgebiet weist eine Zustelladresse auf, an den der Behälter mit den Postsendungen zu transportieren ist. Diese Zieladresse ist z. B. ein bestimmtes Ziel-Verteilzentrum, das für das Zustellgebiet zuständig ist. Der Behälter mit den Sendungen lässt sich nur dann transportieren an die korrekte Zieladresse, wenn er die Zieladresse in einer für einen Menschen lesbaren Form anzeigt.

Ein mit Sendungen gefüllter Behälter wird während des Transports von Menschen bewegt und z. B. von einem Transportmittel in ein anderes umgeladen. Beispielsweise wird er von einem Behälterwagen in einen Lkw getragen. Im Ausführungsbeispiel ist es nicht erforderlich, dass ein Mensch, der den Behälter bewegt, ein Lesegerät zum Auslesen eines elektronischen Datenspeichers mit sich führt. Vielmehr wird bewirkt, dass der Behälter die Zieladresse in einer von Menschen lesbaren Form darstellt, also mit Hilfe von Buchstaben und/oder Ziffern.

Weiterhin weist jede Stellfläche einen Stellflächen-Sensor auf. Dieser Stellflächen-Sensor stellt fest, ob sich ein Behälter auf der Stellfläche befindet oder nicht. Der Sensor kann automatisch arbeiten und z. B. die Belastung der Stellfläche durch das Gewicht eines Behälters ermitteln. Oder aber ein Werker betätigt ein Betätigungselement und bestätigt damit, dass er einen Behälter auf die Stellfläche gestellt hat.

Im Ausführungsbeispiel werden mehrere elektronische Etiketten verwendet. Jeder Behälter weist eine Haltevorrichtung für ein elektronisches Etikett auf. Diese Haltevorrichtung befindet sich außen an einer Seitenwand des Behälters und ist so angebracht, dass sie ein Etikett sicher zu halten vermag. Die Haltevorrichtung hält ein Etikett so, dass das Anzeigeelement während des Transports von einem Menschen abgelesen werden kann. Die Haltevorrichtung verhindert, dass das Etikett während des Transports versehentlich vom Behälter getrennt wird. Andererseits hält sie das Etikett so, dass ein Werker ein Etikett in die Haltevorrichtung einführen kann und umgekehrt ein eingeführtes Etikett aus der Haltevorrichtung entnehmen kann. Beispielsweise hält die Haltevorrichtung das Etikett mit einem Schnappverschluss fest.

Jedes elektronische Etikett umfasst einen Datenspeicher, in dem sich im Ausführungsbeispiel mindestens die folgende Informationen abspeichern lassen:
- eine eindeutige Kennung für das Etikett, wobei diese Kennung das Etikett von allen anderen elektronischen Etiketten des Logistik-Dienstleisters unterscheidet, und
- eine Kennung für die Zieladresse, an der der Behälter zu transportieren ist.

Die abgespeicherte Etikett-Kennung bleibt in der Regel unverändert.

Jedes Etikett umfasst weiterhin
- eine Empfangseinheit, um eine Behälterkennung und eine Zieladresse in elektronischer Form von einem Sendegerät zu empfangen, und
- ein Anzeigeelement, auf der das Etikett die abgespeicherte Zieladresse in einer Form, die ein Mensch lesen kann, darstellt.

Dieses Anzeigeelement weist vorzugsweise einen Flüssigkristall-Bildschirm auf, auf dem die Zieladresse angezeigt wird. Vorzugsweise arbeitet jedes elektronische Etikett bistabil, d. h. es vermag die Zieladresse anzuzeigen, ohne hierfür elektrische Energie zu verbrauchen. Elektrische Energie wird lediglich dafür benötigt, um eine neue Zieladresse in den Datenspeicher zu schreiben und die lesbare Darstellung auf dem Anzeigeelement zu erzeugen. Daher braucht der Behälter mit der Haltevorrichtung weder von außen mit elektrischer Energie versorgt zu werden noch eine eigene Spannungsquelle aufweisen.

Derartige elektronische Etiketten sind z. B. aus
DE 102004037363 A1, DE 102004037364 A1 und DE 102004037365 A1 bekannt.

In einer Ausgestaltung lässt sich im Datenspeicher des Etiketts zusätzlich die Information abspeichern, in welchen Behälter dieses Etikett gesteckt werden soll. Im Datenspeicher ist in dieser Ausgestaltung zusätzlich eine eindeutige Kennung für einen Behälter abspeicherbar. Diese Kennung unterscheidet den Behälter von allen anderen Behältern des Logistik-Dienstleisters. Die Behälter-Kennung, die im Datenspeicher des Etiketts abgespeichert ist, ändert sich immer dann, wenn das Etikett in die Haltevorrichtung eines andren Behälters eingesteckt wird.

Die Sortieranlage umfasst weiterhin mindestens ein Sendegerät. Die Anzahl der Sendegeräte ist vorzugsweise deutlich geringer als die Anzahl der Ausgabefächer, so dass ein Sendegerät mehreren oder gar allen Ausgabefächern zugeordnet ist. "Zugeordnet" bedeutet: Das Sendegerät vermag solche Etiketten zu beschrieben, die später diejenigen Behälter kennzeichnen, in denen Sendungen aus einem der zugeordneten Ausgabefächer transportiert werden.

Weiterhin ist jedem Ausgabefach jeweils eine Aufnahmekomponente zum Aufnehmen eines Etiketts zugeordnet. Jede Aufnahmekomponente vermag ein Etikett temporär aufzunehmen. Ein Werker steckt ein Etikett in die Aufnahmekomponente und entnimmt das Etikett wieder, nachdem das Sendegerät das Etikett beschrieben hat.

Im Ausführungsbeispiel ist jedem Ausgabefach genau eine Aufnahmekomponente zugeordnet. "Zugeordnet" bedeutet: In die Aufnahmekomponente werden diejenigen Etiketten eingeführt, die später diejenigen Behälter kennzeichnen, in denen Sendungen aus dem zugeordneten Ausgabefach transportiert werden.

Vorzugsweise befindet sich die Aufnahmekomponente in der Nähe des zugeordneten Ausgabefachs, beispielsweise über dem Ausgabefach, so dass ein Werker sofort erkennen kann, welche Aufnahmekomponente zu welchem Ausgabefach gehört.

Vorzugsweise ist die Aufnahmekomponente so angeordnet, dass das Anzeigeelement eines Etiketts lesbar ist, während die Aufnahmekomponente das Etikett aufnimmt und das Sendegerät das Etikett beschreibt. Dadurch kann ein Mensch das Ergebnis des Beschreibens sofort kontrollieren. Ein weiterer Vorteil ist, dass das beschriebene Etikett einem Werker die Zieladresse für den Behälter anzeigt. Dadurch spart die Erfindung eine ortsfeste Anzeigefläche für die Zieladresse ein. Die ortsfeste Aufnahmekomponente lässt sich also dort anbringen, wo sonst eine ortsfeste Anzeigefläche vorhanden wäre. Das Anzeigeelement des Etiketts in der Aufnahmekomponente fungiert vielmehr zugleich als Anzeigefläche für die Zieladresse.

Jedes Sendegerät ist dazu ausgestaltet, an ein elektronisches Etikett eine rechnerverfügbare Zieladresse zu übermitteln und diese Zieladresse im Datenspeicher des Etiketts abzuspeichern. Die Zieladresse wird z. B. von einer Erzeugungseinheit GU der Sortieranlage generiert und an das Sendegerät übermittelt. Jedem Sendegerät sind ein oder mehrere Aufnahmekomponenten zugeordnet.

Das Sendegerät vermag die Übermittlung dann vorzunehmen, wenn das Etikett sich in einer dem Sendegerät zugeordneten Aufnahmekomponente befindet.

In einer Ausgestaltung weist das Sendegerät eine einzige Antenne auf. Diese eine Antenne des Sendegeräts ist so angeordnet, dass das Sendegerät über seine Antenne alle zugeordneten Aufnahmekomponenten erreicht. Mit Hilfe der Etikett-Sensoren entscheidet das Sendegerät, wie es mittels der einen Antenne die aktuell richtige Aufnahmekomponente erreicht.

In einer anderen Ausgestaltung ist jeder Aufnahmekomponente jeweils eine Antenne des Sendegeräts zugeordnet. Es gibt also genauso viele Antennen wie Aufnahmekomponenten. Ein Sendegerät steuert mehrere Antennen an. Die zugeordnete Antenne befindet sich in der Nähe der Aufnahmekomponente. Sie fungiert als ein Schreibkopf, der ein Etikett in der Aufnahmekomponente beschreibt. Weil das Sendegerät "weiß", in welcher Aufnahmekomponente sich das aktuell zu beschreibende Etikett befindet, und kennt die Zuordnungen von Antennen zu Aufnahmekomponenten. Daher "weiß" das Sendegerät auch, welche Antenne es anzusteuern hat, um dieses Etikett zu beschriften ist.

Möglich sind auch verschiedene Mischformen, z. B. die, dass das Sendegerät halb so viele Antennen aufweist wie es Aufnahmekomponenten gibt und jede Antenne jeweils zwei Aufnahmekomponenten zugeordnet ist.

Das Sendegerät vermag in einer Ausgestaltung weiterhin die Kennung eines Etiketts auszulesen, das sich in der Aufnahmekomponente befindet. Hierzu ist das Sendegerät mit einem geeigneten Lesegerät verbunden, z. B. mit einem Lesegerät für RFID-Chips. Durch das Auslesen ermittelt das Sendegerät automatisch, ob sich überhaupt ein elektronisches Etikett in der zum Schreiben richtigen Position in dieser Aufnahmekomponente befindet. Falls dies der Fall ist, "weiß" das Sendegerät, welches Etikett sich gerade in dieser Aufnahmekomponente befindet.

Weil die Sortieranlage jedem Ausgabefach temporär oder dauerhaft eine Zieladresse zugeordnet hat, "weiß" die Sortieranlage, welche Zieladresse das Sendegerät jeweils an ein Etikett zu übermitteln hat. Diese Zieladresse ist diejenige Zieladresse, an die die Sendungen im Ausgabefach zu transportieren sind.

Jede Aufnahmekomponente umfasst einen Etikett-Sensor. Der Etikett-Sensor ermittelt, ob in die Aufnahmekomponente ein Etikett eingeführt wurde oder nicht. Im einfachsten Fall ermittelt der Etikett-Sensor lediglich das Vorhandensein oder Nicht-Vorhandensein eines Etiketts in der zugeordneten Aufnahmekomponente. Möglich ist aber auch, dass der Etikett-Sensor als Lesegerät ausgestaltet ist und den Datenspeicher des Etiketts auszulesen vermag.

In einer Ausführungsform ist jedem Behälter dauerhaft ein elektronisches Etikett zugeordnet. Die Kennung des Behälters wird im Datenspeicher des Etiketts abgespeichert und nicht geändert. Ein Behälter transportiert heute Sendungen aus einem Ausgabefach und morgen aus einem anderen Ausgabefach derselben oder einer anderen Sortieranlage. Weil der Behälter transportiert wird, ändert sich daher die Zieladresse laufend, in der Regel vor jedem Transportvorgang.

Zu Beginn des Verfahrens werden ein leerer Behälter und dasjenige elektronische Etikett, das diesem Behälter zugeordnet ist, zu einem Ausgabefach der Sortieranlage transportiert. Dieser Transport wird von einem Werker oder auch einem Handhabungsautomaten durchgeführt. In einer Ausgestaltung ist das Etikett in die Haltevorrichtung des Behälters eingeführt. In einer anderen Ausgestaltung werden der Behälter und das Etikett getrennt zum Ausgabefach transportiert.

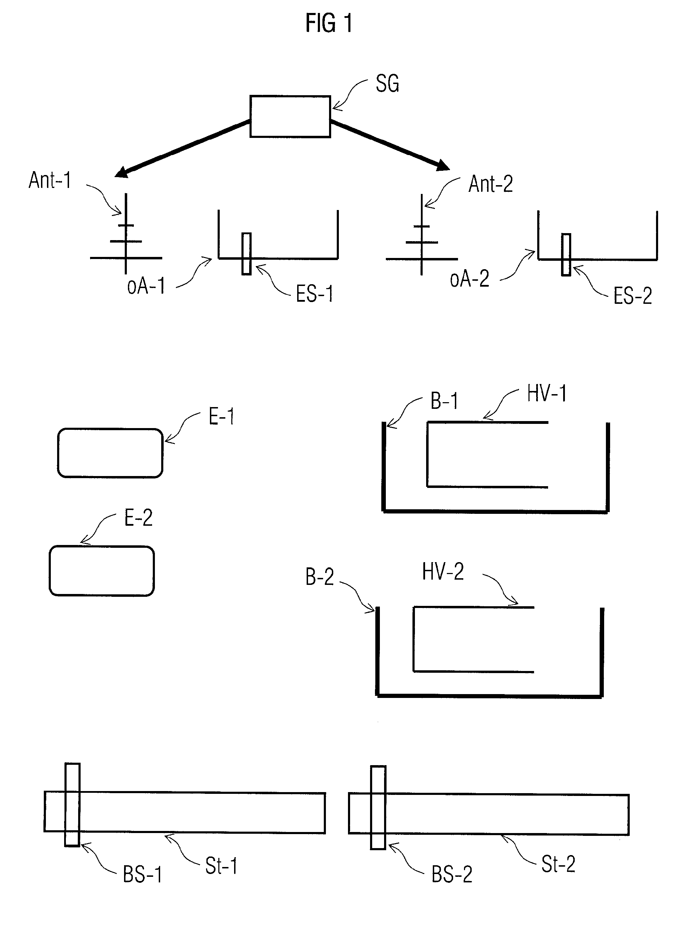

Figur 1 veranschaulicht diese andere Ausgestaltung und zeigt den Anfangszustand vor dem Beladen der Transportbehälter und dem Beschreiben der Etiketten. Gezeigt werden eine Übertragungseinrichtung mit zwei Antennen Ant-1 und Ant-2 sowie einem Steuergerät SG. Gezeigt werden weiterhin zwei ortsfeste Aufnahmekomponenten oA-1 und oA-2 zum Aufnehmen von elektronischen Etiketten. Zwei Transportbehälter B-1 und B-2 sowie zwei elektronische Etiketten E-1 und E-2 werden getrennt zur Vorrichtung geführt. Das Etikett E-1 weist ein Anzeigeelement DE-1 auf, um Informationen in einer von einem Menschen lesbaren Form anzuzeigen. Das Etikett E-2 weist entsprechend ein Anzeigeelement DE-2 auf. Der Transportbehälter B-1 weist eine Haltevorrichtung HV-1 für ein Etikett auf, der Transportbehälter B-2 eine Haltevorrichtung HV-2. Zum Aufstellen von Behältern sind zwei Stellflächen St-1 und St-2 vorgesehen. Zwei Etiketten-Sensoren ES-1 und ES-2 zeigen an, ob sich in den ortsfesten Aufnahmekomponenten oA-1 bzw. oA-2 ein Etikett befindet. Zwei Behälter-Sensoren BS-1 und BS-2 zeigen an, ob sich auf den Stellflächen St-1 bzw. St-2 ein Transportbehälter befindet oder nicht. Die beiden Etiketten-Sensoren ES-1 und ES-2 sowie die beiden Behälter-Sensoren BS-1 und BS-2 sind mit einer Auswerteeinheit EU verbunden.

In einer anderen Ausführungsform ist jedem Behälter nur für die Dauer eines Transports ein Etikett zugeordnet. Bei dieser Ausführungsform werden eine Menge von Behältern und eine Menge von Etiketten zusammen oder getrennt zur Verfügung gestellt. Bei Bedarf nimmt der Werker einen Behälter und ein Etikett. Die nachfolgend beschriebenen Schritte werden durchgeführt.

Wiederholt meldet die Sortieranlage, dass ein Ausgabefach zu entleeren ist, beispielsweise weil dieses Ausgabefach vollständig gefüllt ist oder eine vorgegebene zeitliche Bedingung erfüllt ist. Der Werker - oder der Handhabungsautomat - führt das Etikett in diejenige Aufnahmekomponente ein, die diesem Ausgabefach zugeordnet ist.

Die Auswerteeinheit EU der Sortieranlage erhält Mess-Signale von jedem Etikett-Sensor und stellt fest, wann in welche Aufnahmekomponente ein Etikett eingeführt wurde. Die Auswerteeinheit EU "weiß", welchem Ausgabefach diese Aufnahmekomponente zugeordnet ist. Weiterhin "weiß" die Auswerteeinheit EU die Zieladresse, an die ein Behälter mit den Sendungen dieses Ausgabefachs zu transportieren ist.

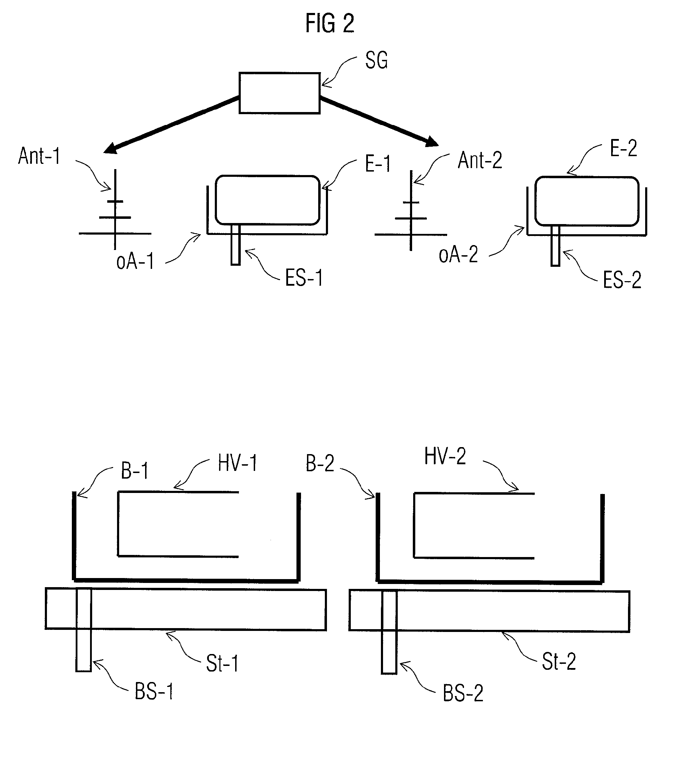

Figur 2 zeigt den Zustand, nachdem die Etiketten in die ortsfesten Aufnahmekomponenten eingebracht sind und bevor die Transportbehälter beladen sind. Das Etikett E-1 befindet sich in der ortsfesten Aufnahmekomponente oA-1, das Etikett E-2 in der ortsfesten Aufnahmekomponente oA-2. Die Etikett-Sensoren ES-1 und ES-2 melden einer Auswerteeinheit EU, dass sich in diesen Aufnahmekomponenten oA-1 und oA-2 Etiketten befinden. Die Behälter-Sensoren BS-1 und BS-2 melden dieser Auswerteeinheit EU, dass sich auf den Stellflächen St-1 und St-2 Behälter befinden.

Nachdem die Auswerteeinheit EU festgestellt hat, dass in eine Aufnahmekomponente ein Etikett eingeführt wurde, löst die Auswerteeinheit EU in einer Ausgestaltung den Vorgang aus, dass das Sendegerät die eindeutige Kennung des Etiketts in der Aufnahmekomponente auszulesen versucht. Möglich ist auch, dass dieser Vorgang durch einen Knopfdruck eines Werkers ausgelöst wird. Falls das Auslesen gelingt, steht fest, dass tatsächlich eine elektronische Etikette in die Aufnahmekomponente eingeführt wurde und sich in der richtigen Position befindet. Das Sendegerät hat dann ein bestimmtes Etikett erkannt.

Nachdem das Sendegerät das Etikett erkannt hat, übermittelt es diejenige Zieladresse, an die der Behälter mit den Sendungen im Ausgabefach zu transportieren ist. Wie oben dargelegt, "weiß" die Auswerteeinheit EU diese richtige Zieladresse für die Sendungen des Ausgabefachs. Die Auswerteeinheit EU übermittelt diese Zieladresse an das Sendegerät. Das Sendegerät überträgt diese Zieladresse an das Etikett in der Aufnahmekomponente und speichert sie in dessen Datenspeicher ab. Außerdem schreibt das Sendegerät mit der als Schreibkopf fungierenden Antenne die Zieladresse auf das Anzeigeelement des Etiketts. Die Zieladresse ist danach im Etikett sowohl in einer rechnerverfügbaren Form als auch in einer von einem Menschen lesbaren Form abgespeichert. Die rechnerverfügbare Form ist im Datenspeicher des Etiketts abgelegt, die lesbare Form auf dem Anzeigeelement.

Wie lange das Schreiben der Zieladresse auf das Anzeigeelement dauert, hängt vor allem von dem Abstand zwischen Antenne und Etikett sowie von der Sendeleistung, Feldstärke und Charakteristik der Antenne ab. Das Schreiben kann bis zu 30 Sekunden dauern.

Nachdem das Sendegerät die Zieladresse auf das Anzeigeelement geschrieben hat, informiert das Anzeigeelement den Werker darüber, an welche Zieladresse dieser Behälter zu transportieren ist. Diese Ausgestaltung der Erfindung spart somit eine ortsfeste Anzeigefläche für die Zieladresse in der Nähe des Ausgabefachs ein.

Der Werker - oder der Handhabungsautomat - belädt den Behälter mit den Sendungen im Ausgabefach. Möglich ist auch, dass die Sortieranlage die Sendungen direkt in den Behälter ausgibt. Während der Behälter beladen wird, beschreibt das Sendegerät so wie gerade beschrieben das Etikett. Dieses parallele Arbeiten hat den Vorteil, dass das Beschreiben des Etiketts keine Zeitverzögerung verursacht. Weil das Sendegerät Bestandteil der Sortieranlage ist, braucht der Werker kein mobiles Sendegerät zu tragen, um das Etikett mit der Zieladresse zu beschreiben.

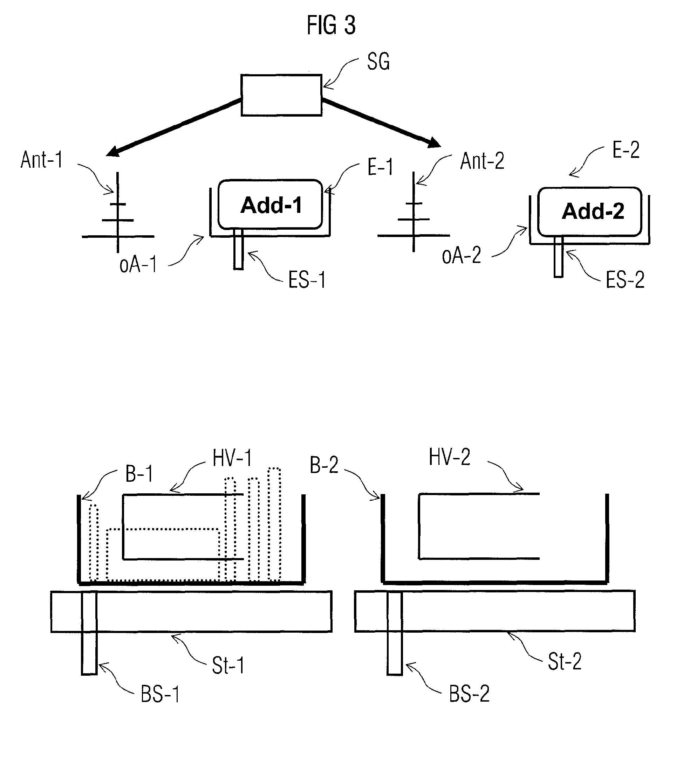

Figur 3 zeigt den Zustand, nachdem beide Etiketten beschrieben sind und der Transportbehälter B-1 beladen ist. Das Etikett E-1 ist mit der Zieladresse Add-1 beschrieben, das Etikett E-2 mit der Zieladresse Add-2. Angedeutet sind mehrere Postsendungen im Transportbehälter B-1.

Während das Sendegerät das Etikett beschreibt, befindet sich das Etikett in der ortsfesten Aufnahmekomponente und nicht in der Haltevorrichtung am Behälter. Dadurch ist es möglich, das Sendegerät in einer zureichend großen Entfernung von der Stellfläche anzubringen und eine gute Abschirmung zwischen der Antenne des Sendegeräts und der Stellfläche zu gewährleisten. Dadurch wird vermieden, dass ein Werker, der einen auf der Stellfläche stehenden Behälter belädt, durch die Strahlung des Sendegeräts gesundheitlich gefährdet wird. Weiterhin wird vermieden, dass ein im Behälter befindlicher Gegenstand stark bestrahlt wird.

Zugleich wird ermöglicht, das Sendegerät mit einer ausreichend großen Sendeleistung auszustatten, um ein rasches Beschreiben zu ermöglichen. Weil das Sendegerät vorzugsweise ortsfest an der Sortieranlage angebracht ist, kann das Sendegerät deutlich größer und schwerer sein als ein mobiles Sendegerät. Im Vergleich zu einem mobilen Sendegerät sinkt bei Verwendung eines ortsfesten Sendegeräts außerdem die Gefahr, dass das Sendegerät fallengelassen wird, verloren geht oder gestohlen wird.

Das Sendegerät gibt vorzugsweise eine Meldung ab, sobald der Vorgang des Beschreibens abgeschlossen ist. Diese Meldung kann z. B. aus einem akustischen Signal bestehen oder auch daraus, dass das Etikett die Zieladresse vollständig auf dem Anzeigeelement darstellt.

Sobald der Behälter beladen und das Etikett beschrieben worden sind, entnimmt der Werker das Etikett aus der Aufnahmekomponente. Der Etikett-Sensor registriert die Entnahme des Etiketts aus der Aufnahmekomponente. Alternativ hierzu kann auch der Werker einen Knopf drücken und damit die Entnahme mitteilen. Der Werker führt das beschriebene und entnommene Etikett in die Haltevorrichtung des Behälters ein. Der Werker - oder der Handhabungsautomat - nimmt den Behälter von der Stellfläche, die dem Ausgabefach zugeordnet ist. Der Stellflächen-Sensor registriert, dass der Behälter von der Stellfläche genommen wurde. Die Signale der beiden Sensoren werden dazu verwendet, zu überprüfen, ob ein beschriebenes Etikett in den richtigen Behälter gesteckt wurde, was weiter unten beschrieben wird.

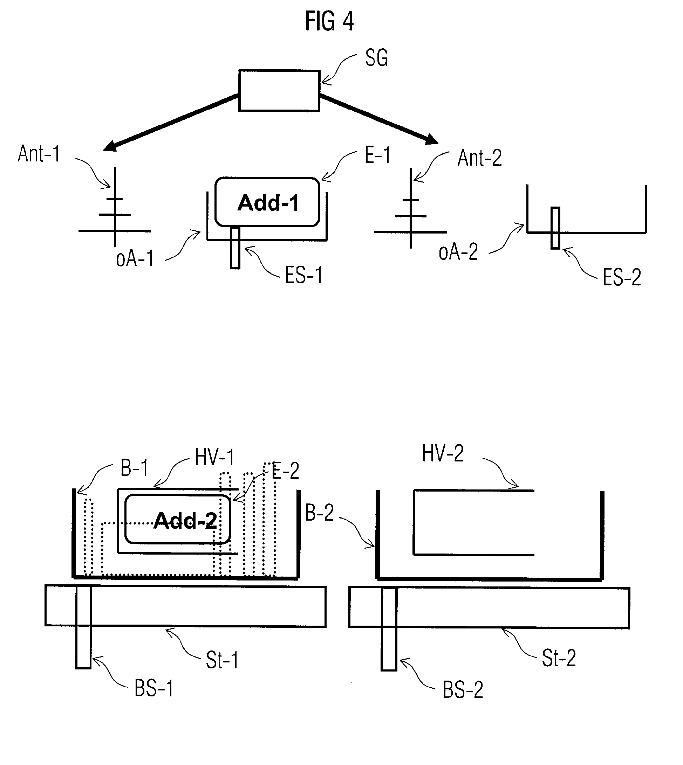

Figur 4 zeigt den Zustand, nachdem in die Haltevorrichtung HV-1 des beladenen Behälters B-1 das falsche Etikett gesteckt wurde, nämlich das Etikett E-2 mit der Zieladresse Add-2. Der Etikett-Sensor ES-2 meldet, dass sich in der ortsfesten Aufnahmekomponente oA-2 kein Etikett befindet. Hingegen meldet der Behälter-Sensor BS-2 weiterhin, dass sich auf der Stellfläche St-2 ein Behälter befindet. Nach Ablauf einer Zeitschranke erkennt die Auswerteeinheit EU einen Fehler und meldet folgendes: Das Etikett, das sich zuvor in oA-2 befand und mit der Zieladresse Add-2 beschrieben ist, befindet sich im falschen Behälter.

Der Werker - oder der Handhabungsautomat - beginnt mit dem Transport des Behälters zur Zieladresse. Beispielsweise wird der Behälter auf ein Förderband gestellt oder in einen Behälterwagen. Das Etikett mit der Zieladresse zeigt einem Menschen die Zieladresse ein. Beispielsweise beim Umladen informiert die Zieladresse einen Werker darüber, in welchen Behälterwagen er den Behälter zu transportieren hat.

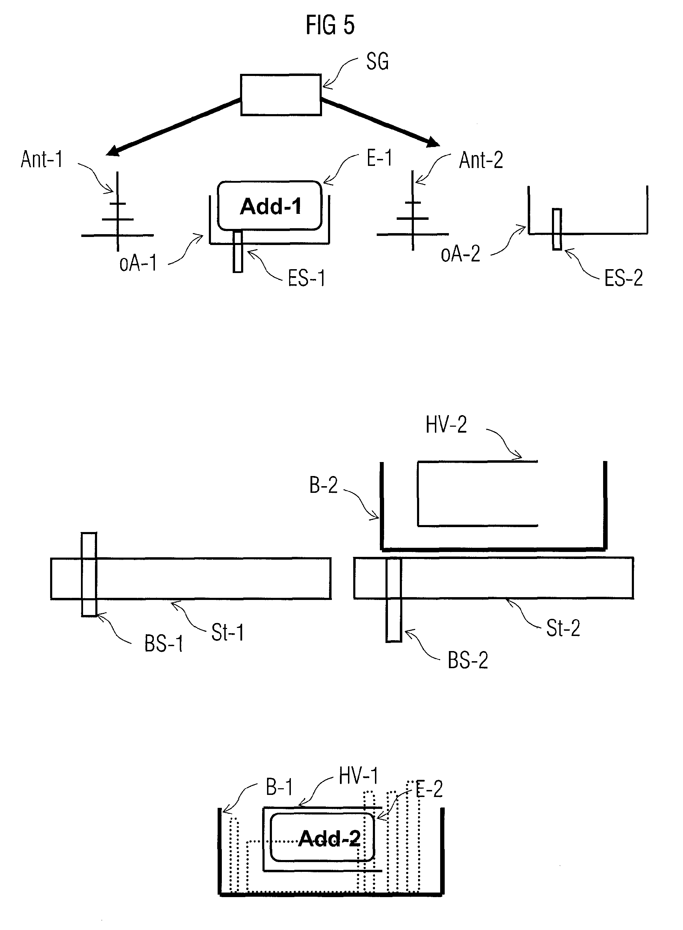

Figur 5 zeigt den Zustand, nachdem der Transportbehälter B-1 mit dem falschen Etikett E-2 von der Stellfläche St-1 genommen wurde. Der Behälter-Sensor BS-1 meldet, dass sich auf der Stellfläche St-1 kein Behälter befindet. Hingegen meldet der Etikett-Sensor ES-1 weiterhin, dass sich in der ortsfesten Aufnahmekomponente oA-1 ein Etikett befindet. Nach Ablauf einer Zeitschranke erkennt die Auswerteeinheit EU einen Fehler und meldet folgendes: Der Behälter, der sich zuvor auf St-1 befand und an die Zieladresse Add-1 zu transportieren ist, ist mit einem falschen Etikett versehen worden.

Zugleich vermag während des Transports wiederholt ein Lesegerät den Datenspeicher des Etiketts automatisch auszulesen.

Dadurch ermittelt das Lesegerät die abgespeicherte Zieladresse und außerdem die Kennung des Behälters. Die ausgelesene Zieladresse wird dafür verwendet, den weiteren Transport des Behälters dann zu steuern, wenn ein Automat, z. B. ein Handhabungsautomat, den Transport fortsetzt. Die Zieladresse kann außerdem dazu verwendet werden, um zu kontrollieren, ob der Behälter sich noch auf dem richtigen Weg befindet, z. B. ob er sich tatsächlich in einem Fahrzeug befindet, das zur abgespeicherten und dargestellten Zieladresse fährt. Die ausgelesene Kennung des Behälters wird dafür verwendet, den Weg des Behälters über mehrere Transporte hinweg zu verfolgen ("tracking"). Die Kennung und der aktuelle Ort des Lesegeräts werden an eine zentrale Rechenanlage übermittelt. Diese Zentrale weiß, wo sich der Behälter aktuell befindet und wie lange er schon verwendet wurde. Beispielsweise lassen sich die Verwendungsdauer und der gesamte Transportweg des Behälters überwachen.

Vorzugsweise ermittelt die Auswerteeinheit EU der Sortieranlage automatisch, ob tatsächlich das beschriebene Etikett in die richtige Haltevorrichtung gesteckt wurde. Die richtige Haltevorrichtung ist die Haltevorrichtung des Behälters, in dem die Sendungen aus dem Ausgabefach gelegt wurden. Bei richtigem Einstecken zeigt das Etikett die richtige Zieladresse für den Behälter.

Diese Auswerteeinheit EU ist mit dem Etikett-Sensor ES-1 und dem zugeordneten Behälter-Sensor BS-1 verbunden. Sie registriert
- den Zeitpunkt, an dem der Etikett-Sensor ES-1 eines Ausgabefachs die Entnahme eines Etiketts aus der Aufnahmekomponente ermittelt und meldet, und
- den Zeitpunkt, an dem der Behälter-Sensor BS-1 registriert, dass ein Behälter von der Stellfläche St-1 dieses Ausgabefachs genommen wurde.

Die Auswerteeinheit EU ermittelt den zeitlichen Abstand zwischen diesen beiden Zeitpunkten und vergleicht diesen zeitlichen Abstand mit einer vorgegebenen Zeitschranke. Ist der zeitliche Abstand zu groß, so erzeugt die Auswerteeinheit EU eine Fehlermeldung, die auf einer geeigneten Meldeeinheit ausgegeben wird. Die Auswerteeinheit EU erzeugt auch dann eine Meldung, wenn der eine der beiden Sensoren eine Entnahme meldet, aber der andere Sensor anschließend nach Ablauf der Zeitschranke keine Entnahme gemeldet hat und auch vor der Entnahme-Meldung des ersten Sensors keine Entnahme meldete.

In beiden Fällen wurde der Behälter überhaupt nicht mit einem Etikett versehen oder aber mit einem Etikett aus einer anderen Aufnahmekomponente. Im ersten Fall fehlt dem Behälter ein Etikett und somit eine Zieladresse. Im zweiten Fall ist in die Haltevorrichtung des Behälters ein Etikett mit einer falschen Zieladresse eingesteckt worden.

In einer anderen Ausführungsform wird einem Behälter ein elektronisches Etikett nicht dauerhaft zugeordnet, sondern nur für die Dauer eines Transportvorgangs. In dieser Ausführungsform ist jeder Behälter dauerhaft mit einem Datenträger versehen, auf der die Kennung des Behälters abgespeichert ist. Dieser Datenträger kann einfach ein Strichcode ("bar code") sein, der auf dem Behälter aufgeklebt oder aufgedruckt ist. Der Datenträger kann auch ein Transponder eines RFID-Systems sein, der automatisch auslesbar ist.

In einer Ausgestaltung ist zusätzlich mindestens ein Lesegerät für derartige Datenträger an Behältern vorgesehen. Dieses Lesegerät kann ortsfest an der Sendeanlage angebracht sein. Beispielsweise ist jeder Stellfläche ein Lesegerät zugeordnet. Möglich ist auch, dass ein Werker ein solches Lesegerät trägt.

Dieses Lesegerät vermag die Kennung eines Behälters, der auf der Stellfläche steht, auszulesen und dadurch zu ermitteln, welcher Behälter sich auf der Stellfläche befindet.

Die Auswerteeinheit ist sowohl mit den Stellflächen-Sensoren als auch mit dem oder den Lesegeräten verbunden. Dadurch ermittelt die Auswerteeinheit, wann welcher Behälter auf welche Stellfläche gestellt wurde.

Diese Ausführungsform ermöglicht es, die Behälter und die elektronischen Etiketten getrennt zur Sortieranlage zu transportieren. Beispielsweise befinden sich die Etiketten in einem Vorratsbehälter. Ein Werker - oder ein Handhabungsautomat - stellt einen leeren Behälter auf die Stellfläche eines Ausgabefachs und führt ein beliebiges Etikett in die Aufnahmekomponente ein. Das dem Ausgabefach zugeordnete Lesegerät liest den Datenträger des Behälters aus und ermittelt dadurch, welcher Behälter auf die Stellfläche gestellt wurde.

Das Sendegerät speichert in einer Ausführungsform - zusätzlich zur Zieladresse - die gelesene Behälter-Kennung im Datenspeicher des Etiketts ab. Dadurch "weiß" das Etikett, für welchen Behälter es die Zieladresse anzeigen soll. Wird das Etikett in die richtige Haltevorrichtung gesteckt, "weiß" das Etikett daher, an welchem Behälter es sich gerade befindet.

Außerdem speichert das Sendegerät so wie bei der ersten Ausführungsform die Zieladresse im Datenspeicher des Etiketts ab und schreibt diese Zieladresse auf das Anzeigeelement des Etiketts. Auch die übrigen Schritte stimmen bei der anderen Ausführungsform mit den entsprechenden Schritten der ersten Ausführungsform überein.

In einer dritten Ausführungsform werden die Behälter überhaupt nicht unterschieden. Daher sind auch keine Kennungen der Behälter vorgesehen. Bei der dritten Ausführungsform ist es dann nicht möglich, den Weg des Behälters auf seinem Transport zur Zieladresse automatisch nachzuverfolgen.

Dafür ist die dritte Ausführungsform einfacher. Im Datenspeicher des Etiketts wird nur die jeweilige Zieladresse abgespeichert, aber nicht die Kennung eines Behälters. Das Sendegerät, das einem Ausgabefach zugeordnet ist, speichert so wie oben beschrieben die Zieladresse im Datenspeicher eines eingeführten Etiketts ab und schreibt diese Zieladresse auf das Anzeigeelement des Etiketts. Ein Mensch vermag die Zieladresse auf dem Anzeigeelement zu lesen. Ein Lesegerät vermag die abgespeicherte Zieladresse auszulesen.

### Bezugszeichenliste

| *Bezugszeichen* | *Bedeutung* |
|---|---|
| Ant-1, Ant-2 | Antennen |
| B-1, B-2 | Transportbehälter |
| BS-1, BS-2 | Behälter-Sensoren |
| DE-1 | Anzeigeelement des Etiketts E-1 |
| DE-2 | Anzeigeelement des Etiketts E-2 |
| E-1, E2 | elektronische Etiketten |
| ES-1, ES-2 | Etikett-Sensoren |
| HV-1, HV-2 | Haltevorrichtungen an den Transportbehältern B-1, B-2 |
| oA-1, oA-2 | Ortsfeste Aufnahmekomponenten für elektronische Etiketten |
| SG | Steuergerät des Sendegeräts |
| St-1, St-2 | Stellflächen für Transportbehälter |

## Patentansprüche

1. Vorrichtung zum Anbringen einer vorgegebenen Zieladresse (Add-1, Add-2) an einen Transportbehälter (B-1, B-2),
der zum Transport eines Gegenstands ausgestaltet ist,
wobei die Vorrichtung
- mindestens ein elektronisches Etikett (E-1, E-2), in dem die Zieladresse (Add-1, Add-2) abspeicherbar ist,
- eine am Transportbehälter (B-1, B-2) befestigte Haltevorrichtung (HV-1, HV-2), die zum Halten des Etiketts (E-1, E-2) während des Transports ausgestaltet ist, und
- eine Übertragungseinrichtung (SG, Ant-1, Ant-2) zum Übertragen der Zieladresse (Add-1, Add-2) an das Etikett (E-1, E-2) und zum Abspeichern der Zieladresse (Add-1, Add-2) im Etikett (E-1, E-2)
umfasst,
**dadurch gekennzeichnet, dass**
- das mindestens eine Etikett (E-1, E-2) aus der Haltevorrichtung (HV-1, HV-2) entnehmbar ist,
- die Übertragungseinrichtung (SG, Ant-1, Ant-2) als ortsfestes Gerät ausgestaltet ist,
- die Vorrichtung zusätzlich eine ortsfeste Aufnahmekomponente (oA-1, oA-2) zum Aufnehmen eines der Etiketten (E-1, E-2) umfasst und
- die Aufnahmekomponente (oA-1, oA-2) so angeordnet ist, dass die Übertragungseinrichtung (SG, Ant-1, Ant-2) die Zieladresse (Add-1, Add-2) an jedes der Etiketten (E-1, E-2) zu übermitteln vermag, wenn dieses Etikett (E-1, E-2) von der ortsfesten Aufnahmekomponente (oA-1, oA-2) aufgenommen ist.

2. Vorrichtung nach Anspruch 1,
**dadurch gekennzeichnet, dass**
die Vorrichtung einen Etikett-Sensor (ES-1, ES-2) zum Messen, ob sich eines der Etiketten (E-1, E-2) in der Aufnahmekomponente (oA-1, oA-2) befindet oder nicht, umfasst und
der Etikett-Sensor (ES-1, ES-2) so mit der Übertragungseinrichtung (SG, Ant-1, Ant-2) gekoppelt ist,
dass ein Einführen eines der Etiketten (E-1, E-2) in die Aufnahmekomponente (oA-1, oA-2) ein Übertragen der Zieladresse (Add-1, Add-2) an dieses Etikett (E-1, E-2) durch die Übertragungseinrichtung (SG, Ant-1, Ant-2) auslöst.

3. Vorrichtung nach Anspruch 1 oder Anspruch 2,
**dadurch gekennzeichnet, dass**
die Vorrichtung
- eine Behälter-Halte-Komponente (St-1, St-2) zum Halten des Transportbehälters (B-1, B-2), während der Gegenstand in den Transportbehälter (B-1, B-2) verbracht wird,
- einen Behälter-Sensor (BS-1, BS-2) zum Messen, ob die Behälter-Halte-Komponente (St-1, St-2) einen Transportbehälter (B-1, B-2) hält oder nicht, und
- einen Etikett-Sensor (ES-1, ES-2) zum Messen, ob sich eines der Etiketten (E-1, E-2) in der Aufnahmekomponente (oA-1, oA-2) befindet oder nicht,
umfasst.

4. Vorrichtung nach Anspruch 3,
**dadurch gekennzeichnet, dass**
die Vorrichtung eine Auswerteeinheit (EU) umfasst,
die mit beiden Sensoren (BS-1, BS-2, ES-1, ES-2) verbunden ist und zur Durchführung der folgenden Schritte ausgestaltet ist:
- unter Verwendung von Messungen des Behälter-Sensors (BS-1, BS-2) Ermitteln, ob ein Transportbehälter (B-1, B-2) von der Behälter-Halte-Komponente (St-1, St-2) entfernt wurde oder nicht, und
- unter Verwendung von Messungen des Etikett-Sensors (ES-1, ES-2) Ermitteln,
ob innerhalb einer vorgegebenen Zeitschranke vor oder nach einem Entfernen eines Transportbehälters (B-1, B-2) von der Behälter-Halte-Komponente (St-1, St-2)
ein Etikett (E-1, E-2) aus der Aufnahmekomponente (oA-1, oA-2) entnommen wurde oder nicht.

5. Vorrichtung nach Anspruch 3 oder Anspruch 4,
**dadurch gekennzeichnet, dass**
die Vorrichtung eine Auswerteeinheit (EU) umfasst,
die mit beiden Sensoren (BS-1, BS-2, ES-1, ES-2) verbunden ist und zur Durchführung der folgenden Schritte ausgestaltet ist:
- unter Verwendung von Messungen des Etikett-Sensors (ES-1, ES-2) Ermitteln, ob eines der Etiketten (E-1, E-2) aus der Aufnahmekomponente (oA-1, oA-2) entnommen wurde oder nicht,
- unter Verwendung von Messungen des Behälter-Sensors (BS-1, BS-2) Ermitteln,
ob innerhalb einer vorgegebenen Zeitschranke vor oder nach einem Entnehmen eines Etiketts (E-1, E-2) aus der Aufnahmekomponente (oA-1, oA-2)
ein Transportbehälter (B-1, B-2) von der Behälter-Halte-Komponente (St-1, St-2) entfernt wurde.

6. Vorrichtung nach einem der Ansprüche 1 bis 5,
**dadurch gekennzeichnet, dass**
das mindestens eine elektronische Etikett (E-1, E-2) ein Anzeigeelement zum Anzeigen der Zieladresse (Add-1, Add-2) in einer vom Menschen lesbaren Form aufweist und
die Übertragungseinrichtung so ausgestaltet ist,
dass sie die Zieladresse (Add-1, Add-2) auf das Anzeigeelement dergestalt zu schreiben vermag,
dass das Anzeigeelement nach dem Schreiben die Zieladresse (Add-1, Add-2) in der vom Menschen lesbaren Form anzeigt.

7. Vorrichtung nach Anspruch 6,
**dadurch gekennzeichnet, dass**
das Anzeigeelement (DE-1, DE-2) so ausgestaltet ist,
dass es die Zieladresse (Add-1, Add-2) anzuzeigen vermag, ohne hierfür elektrische Energie zu verbrauchen.

8. Vorrichtung nach Anspruch 6 oder Anspruch 7,
**dadurch gekennzeichnet, dass**
das Anzeigeelement einen Flüssigkristall-Bildschirm zum Anzeigen der Zieladresse (Add-1, Add-2) umfasst.

9. Vorrichtung nach einem der Ansprüche 1 bis 8,
**dadurch gekennzeichnet, dass**
die Aufnahmekomponente (oA-1, oA-2) so angeordnet ist,
dass das Etikett (E-1, E-2) die Zieladresse (Add-1, Add-2) anzuzeigen vermag,
wenn das Etikett (E-1, E-2) von der Aufnahmekomponente (oA-1, oA-2) aufgenommen ist.

10. Vorrichtung nach einem der Ansprüche 1 bis 9,
**dadurch gekennzeichnet, dass**
die Vorrichtung mehrere ortsfeste Aufnahmekomponenten (oA-1, oA-2) umfasst und
die Übertragungseinrichtung (SG, Ant-1, Ant-2) so ausgestaltet ist,
dass sie dann, wenn sich eines der Etiketten (E-1, E-2) in einer der Aufnahmekomponenten (oA-1, oA-2) befindet,
die Zieladresse (Add-1, Add-2) an dieses Etikett (E-1, E-2) zu übermitteln vermag.

11. Anlage zum Konfektionieren eines Transports eines Gegenstands in einem Transportbehälter (B-1, B-2) an eine vorgegebene Zieladresse (Add-1, Add-2),
wobei die Anlage
- eine Behälter-Halte-Komponente (St-1, St-2) zum Halten des Transportbehälters, während der Gegenstand in den Transportbehälter (B-1, B-2) verbracht wird,
- eine Erzeugungs-Komponente zum Erzeugen einer rechnerverfügbaren Codierung der Zieladresse (Add-1, Add-2) und
- eine Vorrichtung nach einem der Ansprüche 1 bis 10 umfasst.

12. Verfahren zum Anbringen einer Zieladresse (Add-1, Add-2) an einen Transportbehälter (B-1, B-2), wobei
- der Gegenstand in einen Transportbehälter (B-1, B-2) verbracht wird,
- eine Übertragungseinrichtung (SG, Ant-1, Ant-2) die Zieladresse (Add-1, Add-2) an ein elektronisches Etikett (E-1, E-2) übermittelt und die Zieladresse (Add-1, Add-2) in dem Etikett (E-1, E-2) abspeichert wird und
- das Etikett mit der abgespeicherten Zieladresse (Add-1, Add-2) in eine am Transportbehälter (B-1, B-2) befestigte Haltevorrichtung (HV-1, HV-2) eingeführt wird,
**dadurch gekennzeichnet, dass**
- die Übertragungseinrichtung (SG, Ant-1, Ant-2) als ortsfestes Gerät ausgestaltet ist,
- vor dem Übermitteln und Abspeichern der Zieladresse (Add-1, Add-2) das Etikett (E-1, E-2) in eine ortsfeste Aufnahmekomponente (oA-1, oA-2) eingeführt wird,
- die Übertragungseinrichtung (SG, Ant-1, Ant-2) die Zieladresse (Add-1, Add-2) übermittelt und abspeichert, während sich das Etikett in der Aufnahmekomponente (oA-1, oA-2) befindet
- nach dem Übermitteln und Abspeichern der Zieladresse (Add-1, Add-2) das Etikett aus der Aufnahmekomponente (oA-1, oA-2) entnommen und in die Haltevorrichtung (HV-1, HV-2) eingeführt wird.

13. Verfahren nach Anspruch 12,
**dadurch gekennzeichnet, dass**
der Transportbehälter (B-1, B-2) sich in einer Behälter-Halte-Komponente (St-1, St-2) befindet, während der Gegenstand in den Transportbehälter (B-1, B-2) verbracht wird,
durch einen Behälter-Sensor (BS-1, BS-2) wiederholt gemessen wird, ob sich ein Transportbehälter (B-1, B-2) in der Behälter-Halte-Komponente (St-1, St-2) befindet oder nicht,
durch einen Etikett-Sensor (ES-1, ES-2) wiederholt gemessen wird, ob sich ein elektronisches Etikett (E-1, E-2) in der Aufnahmekomponente (oA-1, oA-2) befindet oder nicht.

14. Verfahren nach Anspruch 13,
**dadurch gekennzeichnet, dass**
durch Auswertung von Messungen des Behälter-Sensors (BS-1, BS-2) ermittelt wird, ob ein Transportbehälter (B-1, B-2) von der Behälter-Halte-Komponente (St-1, St-2) entfernt wurde oder nicht, und
ermittelt wird, ob innerhalb einer vorgegebenen Zeitschranke vor oder nach einem Entfernen eines Transportbehälters (B-1, B-2) von der Behälter-Halte-Komponente (St-1, St-2)
ein Etikett (E-1, E-2) aus der Aufnahmekomponente (oA-1, oA-2) entnommen wurde oder nicht, wofür Messungen des Etikett-Sensors (ES-1, ES-2) ausgewertet werden.

15. Verfahren nach Anspruch 13 oder Anspruch 14,
**dadurch gekennzeichnet, dass**
durch Auswertung von Messungen des Etikett-Sensors (ES-1, ES-2) ermittelt wird, ob ein Etikett (E-1, E-2) aus der Aufnahmekomponente (oA-1, oA-2) entnommen wurde oder nicht, und
ermittelt wird, ob innerhalb einer vorgegebenen Zeitschranke vor oder nach einem Entnehmen eines Etiketts (E-1, E-2) aus der Aufnahmekomponente (oA-1, oA-2)
ein Transportbehälter (B-1, B-2) von der Behälter-Halte-Komponente (St-1, St-2) entfernt wurde oder nicht, wofür Messungen des Behälter-Sensors (BS-1, BS-2) ausgewertet werden.
